# EUROPEAN PATENT APPLICATION

(11) **EP 4 478 673 A1**
(43) Date of publication of application: **18.12.2024**
(21) Application number: 22924888.5
(22) Date of filing: 07.02.2022
(51) Int. Cl.: H04L 27/36

(54) **WIRELESS COMMUNICATION METHOD, WIRELESS COMMUNICATION SYSTEM, AND WIRELESS TRANSMISSION DEVICE**

(71) Applicant: Nippon Telegraph And Telephone Corporation, Chiyoda-ku Tokyo 100-8116 (JP)
(72) Inventor: KURIYAMA, Keita, Musashino-shi, Tokyo 180-8585 (JP); FUKUZONO, Hayato, Musashino-shi, Tokyo 180-8585 (JP); MIYAGI, Toshifumi, Musashino-shi, Tokyo 180-8585 (JP); ONIZAWA, Takeshi, Musashino-shi, Tokyo 180-8585 (JP)
(74) Representative: Hoffmann Eitle
(86) International application number: PCT/JP2022/004720
(87) International publication number: WO 2023/148979

(57) **Abstract**

Provided is a wireless communication method that is suitable for use in an environment where transmission power changes and ensures excellent communication quality over a wide transmission power range. A wireless transmission device 10 and a wireless reception device that support at least two multi-level modulation schemes are used. The multi-level modulation scheme includes a first modulation scheme (QAM) and a second modulation scheme (APSK) having a shorter minimum Euclidean distance on the constellation and a lower PAPR than the first modulation scheme. A power amplifier 26 has a function of changing transmission power. A transmission power control unit 22 determines transmission power, and the power amplifier 26 changes the transmission power. A modulation scheme selection unit 16 compares the transmission power with a threshold value set on the basis of a boundary point at which a linear region and a nonlinear region of the power amplifier 26 are switched, selects the QAM when the transmission power is not greater than the threshold value, and selects the APSK when the transmission power is greater than the threshold value.

## Description

### Technical Field

The present disclosure relates to a wireless communication method, a wireless communication system, and a wireless transmission device, and more particularly, to a wireless communication method, a wireless communication system, and a wireless transmission device suitable for use in an environment where transmission power changes.

### Background Art

Non Patent Literature 1 below describes details of quadrature amplitude modulation (QAM), which is one multi-level modulation scheme for wireless communication. In addition, Non Patent Literature 2 below describes details of amplitude phase shift keying (APSK) which is another example of a multi-level modulation scheme. As represented by these schemes, various multi-level modulation schemes are used in the field of wireless communication.

With regard to the influence of different multi-level modulation schemes on the quality of wireless communication, Non Patent Literature 3 below discloses the following matters:
1. Peak to average power ratio (PAPR) is different for each multi-level modulation scheme;
2. When a power amplifier on the transmitting side uses a nonlinear region, a signal is more likely to be erroneously recognized on the receiving side as the PAPR is higher;
3. When APSK and QAM are compared, the APSK having a lower PAPR is more robust when transmitted in the nonlinear region of the power amplifier.

### Citation List

### Non Patent Literature

Non Patent Literature 1: IEEE Std 802.11ac-2013, IEEE, 2013
Non Patent Literature 2: ETSI EN 302 307-1 V1.4.1, Digital Video Broadcasting, November 2014
Non Patent Literature 3: "M-APSK Modulation for SC-FDMA Communication Systems", Juraj GAZDA, Denis DUPAK, Dusan KOCUR, Department of Electronics and Multimedia Communications, Faculty of Electrical Engineering and Informatics, Technical University of Kosice, Letna 9, 04200 Kosice, Slovakia, 2011

### Summary of Invention

### Technical Problem

On the other hand, in a constellation of symbols used in QAM, a plurality of symbols are arranged in a lattice. On the other hand, in the constellation of symbols used in APSK, a plurality of symbols are arranged in one or more concentric circles. When comparing the two, if the number of symbols is the same, the minimum Euclidean distance between the symbols arranged on a QAM constellation is longer than the minimum Euclidean distance on an APSK constellation.

In the communication of the multi-level modulation scheme, the receiving side recognizes the received signal as one of the symbols on the constellation stored in advance. Specifically, likelihoods of a received signal and symbols present around the received signal are calculated for the constellation, and a symbol having the highest likelihood is recognized as the received signal. In this case, the identification accuracy of the received signal becomes higher as the Euclidean distance between the symbols arranged on the constellation is longer. Therefore, in an environment where a received signal is transmitted without distortion, QAM having a longer minimum Euclidean distance is more likely to ensure an excellent bit error rate (BER) compared with APSK.

In a situation where the power amplifier on the transmitting side can amplify a transmission signal in a linear region, distortion hardly occurs in the transmission signal. Therefore, in such a situation, it is easier to ensure better communication quality with QAM than with APSK. On the other hand, in a situation where the transmission power is large and the power amplifier amplifies a signal in a nonlinear region, the case of using APSK is more likely to ensure excellent communication quality than the case of using QAM due to the reason described in Non Patent Literature 3.

In this way, when the suitability of each multi-level modulation scheme is compared, the superiority and inferiority may be reversed depending on whether the power amplifier uses the linear region or the nonlinear region. In the field of wireless communication, for example, a technique of adaptive transmission power control (ATPC) for adaptively controlling transmission power for the purpose of minimizing transmission power is known.

However, conventionally, control for appropriately switching a multi-level modulation scheme used for communication according to transmission power has not been studied. In this regard, the ATPC technique has room for further improvement by being combined with a technique for switching and using a plurality of multi-level modulation schemes.

The present disclosure has been made in view of the above problems, and a first object of the present disclosure is to provide a wireless communication method for ensuring excellent communication quality over a wide transmission power range by appropriately switching and using a plurality of multi-level modulation schemes according to transmission power.

In addition, a second object of the present disclosure is to provide a wireless communication system that ensures excellent communication quality over a wide transmission power range by appropriately switching and using a plurality of multi-level modulation schemes according to transmission power.

In addition, a third object of the present disclosure is to provide a wireless transmission device that ensures excellent communication quality over a wide transmission power range by appropriately switching and using a plurality of multi-level modulation schemes according to transmission power.

### Solution to Problem

In order to achieve the above objects, a first aspect is desirably a wireless communication method using a wireless transmission device and a wireless reception device that support at least two multi-level modulation schemes, the at least two multi-level modulation schemes including a first modulation scheme and a second modulation scheme having a shorter minimum Euclidean distance on a constellation and a lower peak to average power ratio (PAPR) than the first modulation scheme, and the wireless transmission device having a function of controlling a power amplifier to change transmission power, the wireless communication method including:
a step of determining, by the wireless transmission device, the transmission power;
a step of comparing, by the wireless transmission device, the transmission power with a threshold value set on the basis of a boundary point at which a linear region and a nonlinear region of the power amplifier are switched;
a step of selecting, by the wireless transmission device, the first modulation scheme as a multi-level modulation scheme used for communication when the transmission power is not greater than the threshold value;
a step of selecting, by the wireless transmission device, the second modulation scheme as a multi-level modulation scheme used for communication when the transmission power is greater than the threshold value;
a step of commanding, by the wireless transmission device, the wireless reception device to perform communication using the selected modulation scheme; and
a step of communicating, by the wireless reception device, with the wireless transmission device using the commanded modulation scheme.

A second aspect is desirably a wireless communication system including a wireless transmission device and a wireless reception device that support at least two multi-level modulation schemes, in which
the at least two multi-level modulation schemes include a first modulation scheme and a second modulation scheme having a shorter minimum Euclidean distance on a constellation and a lower PAPR than the first modulation scheme,
the wireless transmission device
has a function of controlling a power amplifier to change transmission power, and
is configured to execute:
   a process of determining the transmission power;
   a process of comparing the transmission power with a threshold value set on the basis of a boundary point at which a linear region and a nonlinear region of the power amplifier are switched;
   a process of selecting the first modulation scheme as a multi-level modulation scheme used for communication when the transmission power is not greater than the threshold value;
   a process of selecting the second modulation scheme as a multi-level modulation scheme used for communication when the transmission power is greater than the threshold value; and
   a process of commanding the wireless reception device to perform communication using the selected modulation scheme, and
   the wireless reception device is configured to communicate with the wireless transmission device using the commanded modulation scheme.

A third aspect is desirably a wireless transmission device that supports at least two multi-level modulation schemes and has a function of communicating with a wireless reception device that supports the at least two multi-level modulation schemes, in which
the at least two multi-level modulation schemes include a first modulation scheme and a second modulation scheme having a shorter minimum Euclidean distance on a constellation and a lower PAPR than the first modulation scheme, and
the wireless transmission device
has a function of controlling a power amplifier to change transmission power, and
is configured to execute:
   a process of determining the transmission power;
   a process of comparing the transmission power with a threshold value set on the basis of a boundary point at which a linear region and a nonlinear region of the power amplifier are switched;
   a process of selecting the first modulation scheme as a multi-level modulation scheme used for communication when the transmission power is not greater than the threshold value;
   a process of selecting the second modulation scheme as a multi-level modulation scheme used for communication when the transmission power is greater than the threshold value; and
   a process of commanding the wireless reception device to perform communication using the selected modulation scheme.

### Advantageous Effects of Invention

According to the first to third aspects, it is possible to ensure excellent communication quality in a wide transmission power range in an environment where transmission power is adaptively controlled.

### Brief Description of Drawings

Fig. 1 is a diagram illustrating a configuration example of a wireless communication system according to a first embodiment of the present disclosure.
Fig. 2 is a diagram illustrating an APSK constellation and a QAM constellation in comparison.
Fig. 3 is a diagram illustrating characteristics of QAM and APSK in comparison.
Fig. 4 is a diagram for describing input/output characteristics of a power amplifier included in a wireless transmission device illustrated in Fig. 1.
Fig. 5 is a diagram illustrating the suitability of QAM and APSK in comparison between a case where the power amplifier uses a linear region and a case where the power amplifier uses a nonlinear region.
Fig. 6 is a block diagram for describing a configuration of the wireless transmission device according to the first embodiment of the present disclosure.
Fig. 7 is a diagram for describing an example of a method of setting a threshold value used by the wireless transmission device illustrated in Fig. 6 to switch a modulation scheme.
Fig. 8 is a flowchart for describing a flow of main processing performed by the wireless transmission device illustrated in Fig. 6.
Fig. 9 is a block diagram for describing a configuration of a wireless transmission device according to a second embodiment of the present disclosure.
Fig. 10 is a flowchart for describing a flow of main processing performed by the wireless transmission device illustrated in Fig. 9.

### Description of Embodiments

### First Embodiment.

### [Overall Configuration of First Embodiment]

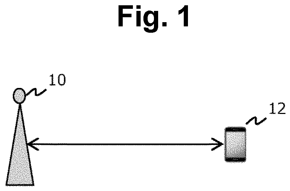

Fig. 1 is a diagram illustrating a configuration example of a wireless communication system according to a first embodiment of the present disclosure. As illustrated in Fig. 1, the system of the present embodiment includes a wireless transmission device 10 and a wireless reception device 12. The wireless transmission device 10 can be, for example, a wireless communication base station managed by a communication carrier or an access point of a wireless local area network (LAN). On the other hand, the wireless reception device 12 may be a terminal device capable of performing communication in both or one of the licensed band and the unlicensed band.

### [Features of First Embodiment]

In the present embodiment, the wireless transmission device 10 and the wireless reception device 12 each have a function of supporting a plurality of multi-level modulation schemes. Here, specifically, a case where the wireless transmission device 10 and the wireless reception device 12 support quadrature amplitude modulation (QAM) and amplitude phase shift keying (APSK), respectively, will be described.

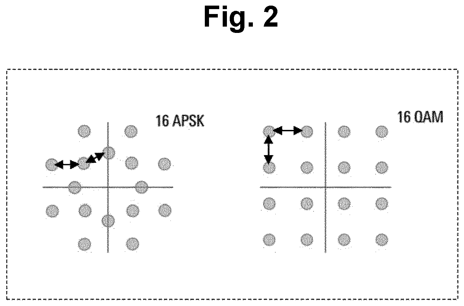

Fig. 2 is a diagram illustrating an APSK constellation and a QAM constellation in comparison. More specifically, the left side of Fig. 2 illustrates a 16 APSK constellation that handles 16 symbols. In addition, the right side of Fig. 2 illustrates a 16 QAM constellation that handles 16 symbols in the same manner. The position of each symbol represents amplitude and phase.

In the 16 APSK constellation, 16 symbols are arranged at equal intervals by eight symbols on two concentric circles. On the other hand, in the 16 QAM constellation, 16 symbols are arranged at equal intervals in a lattice. In the drawing, the minimum Euclidean distance between symbols in each constellation is represented by a bidirectional arrow. When comparing the two, it can be seen that the minimum Euclidean distance in the case of QAM in which symbols are arranged in a lattice is larger than that in the case of APSK.

Next, a peak to average power ratio (PAPR) will be considered. For transmission of individual symbols on a constellation, a larger amplitude requires a larger power. Therefore, in the APSK, peak power occurs when eight symbols arranged on the outer concentric circle are transmitted. On the other hand, in the case of QAM, peak power occurs when four symbols positioned at four corners are transmitted. Therefore, the ratio of the peak transmission power to the value obtained by averaging the transmission power for all the symbols is lower in the APSK. Therefore, when APSK is used, the PAPR tends to be a lower value than when QAM is used.

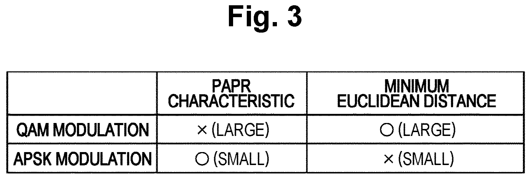

Fig. 3 illustrates the characteristics of the minimum Euclidean distance and PAPR described above in comparison between QAM and APSK. o and × illustrated in the drawing indicate superiority and inferiority in ensuring a good bit error rate (BER) in wireless communication. The reason why such superiority and inferiority occur will be described below.

The wireless reception device 12 illustrated in Fig. 1 receives a command regarding a modulation scheme to be used for communication from the wireless transmission device 10, and selects a modulation scheme according to the command. In any modulation scheme, the wireless reception device 12 arranges the received signal on a constellation on the basis of the amplitude and the phase, and calculates a likelihood with the received signal for each of the plurality of symbols located around the received signal. Then, the received signal is recognized as a symbol having the highest likelihood.

The longer the minimum Euclidean distance on the constellation is, the large difference is likely to occur in the likelihood calculated for each symbol. Therefore, if the received signal is correctly arranged on the constellation, it is easier to ensure the excellent BER when the QAM having a large minimum Euclidean distance is used than when the APSK having a small minimum Euclidean distance is used. The rightmost column in Fig. 3 represents the relationship as QAM "o (large)" and APSK "× (small)".

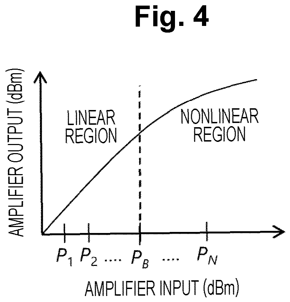

Fig. 4 illustrates input/output characteristics of the power amplifier included in the wireless transmission device 10 illustrated in Fig. 1. As illustrated in Fig. 4, the power amplifier exhibits a linear input/output characteristic in a region where the input power is P_{B} or less, but the characteristic becomes nonlinear in a region where the input power exceeds P_{B}. Then, distortion is superimposed on the signal amplified by the power amplifier using the nonlinear region. If the distortion occurs in the received signal, in the wireless reception device 12, the received signal is arranged at a position shifted from the original position on the constellation. As a result, the signal amplified in the nonlinear region is likely to be erroneously recognized as an erroneous symbol in the wireless reception device 12.

When the wireless transmission device 10 transmits a radio signal, even if the average power falls within the linear region, a signal with a large amplitude may enter the nonlinear region of the power amplifier. Such a phenomenon is more likely to occur as the PAPR of the multi-level modulation scheme used for communication is larger. Therefore, from the viewpoint of preventing signal misrecognition caused by distortion without distorting the transmission signal, APSK having a low PAPR is superior to QAM having a high PAPR. The center column of Fig. 3 represents the above relationship by the indication of QAM "× (large)" and APSK "o (small)".

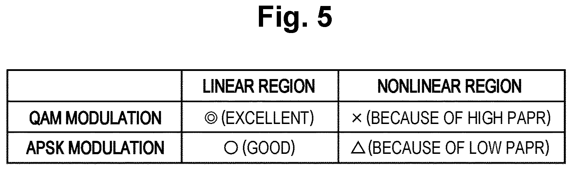

Fig. 5 is a diagram illustrating the suitability of QAM and APSK in comparison between a case where the power amplifier uses a linear region and a case where the power amplifier uses a nonlinear region. When the input power to the power amplifier falls within the linear region, the problem of distortion does not occur even if any modulation scheme is used. In this case, a better BER can be obtained by using QAM rather than APSK in relation to the minimum Euclidean distance. The center column in Fig. 5 represents the above relationship by the indication of QAM "⊙ (excellent)" and APSK "o (good)".

In the nonlinear region of the power amplifier, the larger the input power, the larger the distortion superimposed on the transmission signal. Therefore, when the input power enters the nonlinear region, a larger distortion is superimposed on the signal corresponding to the peak as the PAPR is higher in the multi-level modulation scheme. Then, as the distortion superimposed on the transmission signal is larger, the signal is more likely to be erroneously recognized in the wireless reception device 12. For this reason, in a situation in which the power transmission device uses the nonlinear region, the communication quality of QAM having a high PAPR is likely to deteriorate more than that of APSK having a low PAPR. The rightmost column in Fig. 5 represents the above relationship by the indication of QAM "× (because of high PAPR)" and APSK "Δ (because of low PAPR)".

As described above, the superiority and inferiority of QAM and APSK are reversed depending on whether the operation region of the power amplifier is a linear region or a nonlinear region. Therefore, in the present embodiment, the multi-level modulation scheme used for communication is appropriately switched between QAM and APSK depending on whether the power amplifier operates in the linear region or the nonlinear region.

### [Configuration of Wireless Transmission Device]

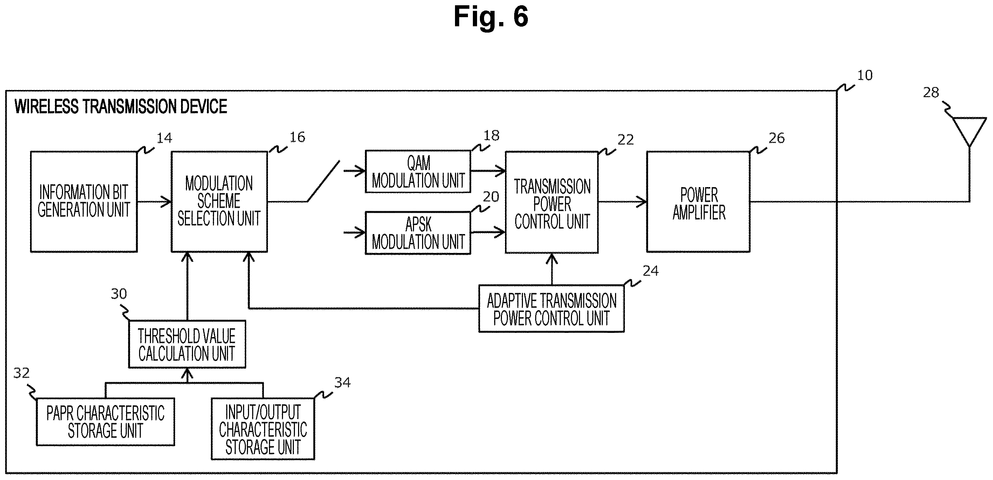

Fig. 6 is a block diagram for describing a configuration of the wireless transmission device 10 used in the present embodiment to implement the above functions. Each element illustrated in Fig. 6 can be configured by dedicated hardware. Furthermore, these elements can also be configured using an arithmetic processing unit and a program for causing the arithmetic processing unit to execute desired processing, in addition to dedicated hardware.

As illustrated in Fig. 6, the wireless transmission device 10 includes an information bit generation unit 14. The information bit generation unit 14 generates bit data corresponding to information to be transmitted to the wireless reception device 12. The bit data generated by the information bit generation unit 14 is provided to a modulation scheme selection unit 16.

The modulation scheme selection unit 16 has a function of selecting a scheme to be used for communication from among a plurality of multi-level modulation schemes. In the present embodiment, QAM and APSK are assumed as modulation schemes used for communication. The modulation scheme selection unit 16 selects either QAM or APSK as a scheme used for communication.

When the modulation scheme selection unit 16 selects QAM, the bit data generated by the information bit generation unit 14 is supplied to a QAM modulation unit 18. On the other hand, when the modulation scheme selection unit 16 selects APSK, the bit data generated by the information bit generation unit 14 is supplied to an APSK modulation unit 20.

The QAM modulation unit 18 modulates the received bit data according to a QAM scheme. On the other hand, the APSK modulation unit 20 modulates the bit data according to an APSK scheme. In either case, the signal generated by the modulation is provided to a transmission power control unit 22.

The transmission power control unit 22 is provided with a command value related to transmission power from an adaptive transmission power control unit 24. The adaptive transmission power control unit 24 appropriately sets the command value by adaptive processing on the basis of the communication environment or the like to obtain desired communication quality. The command value of the transmission power set by the adaptive transmission power control unit 24 is provided to the transmission power control unit 22, and at the same time, is also provided to the modulation scheme selection unit 16.

The transmission power control unit 22 controls the transmission power used for communication on the basis of the command value received from the adaptive transmission power control unit 24, and provides the result to a power amplifier 26. The power amplifier 26 amplifies the modulated signal generated by the QAM modulation unit 18 or the APSK modulation unit 20 to desired transmission power and supplies the transmission power to an antenna 28. As a result, a signal having transmission power controlled by the transmission power control unit is transmitted from the antenna 28 according to the modulation scheme selected by the modulation scheme selection unit 16.

The wireless transmission device 10 includes a threshold value calculation unit 30. The threshold value calculation unit 30 is configured to be able to access a PAPR characteristic storage unit 32 and an input/output characteristic storage unit 34.

The PAPR characteristic storage unit 32 stores the PAPR characteristic of the multi-level modulation scheme handled by the wireless transmission device 10. More specifically, the PAPR characteristic storage unit 32 stores at least the PAPR characteristic of the scheme to be preferentially used in the linear region of the power amplifier 26 for other multi-level modulation schemes among available multi-level modulation schemes. In the example of the present embodiment, since QAM and APSK can be used and QAM should be prioritized in the linear region, at least the PAPR characteristic of QAM is stored in the PAPR characteristic storage unit 32.

In a case where there are three available schemes of A scheme, B scheme, and C scheme, and there is superiority or inferiority of the linear region in the order of A scheme > B scheme > C scheme, at least the PAPR characteristic of A scheme and the PAPR characteristic of B scheme are stored in the PAPR characteristic storage unit 32. The same applies to a case where there are four or more available schemes.

As the number of samples of the signal used for the calculation increases, the PAPR converges to a specific value for each multi-level modulation scheme. In the present embodiment, the convergence value is used as the PAPR of the individual multi-level modulation scheme.

The input/output characteristic storage unit 34 stores input/output characteristics of the power amplifier 26. For example, a curve of input/output characteristics as illustrated in Fig. 4 is stored. Alternatively, a point at which the linear region and the nonlinear region of the power amplifier 26 are switched, for example, a point such as a P1 dB output point may be stored as the input/output characteristics. The P1 dB output point is a point at which the actual output of the power amplifier decreases by 1 dB from the ideal output that should be obtained if the linear characteristic is maintained. Hereinafter, such a point is referred to as a "boundary point".

The threshold value calculation unit 30 accesses the PAPR characteristic storage unit 32 to read the PAPR characteristic of the multi-level modulation scheme to be prioritized in the linear region, and accesses the input/output characteristic storage unit 34 to read the boundary point of the power amplifier 26. Then, a point backed off by the read PAPR from the read boundary point is calculated as a modulation scheme switching threshold value.

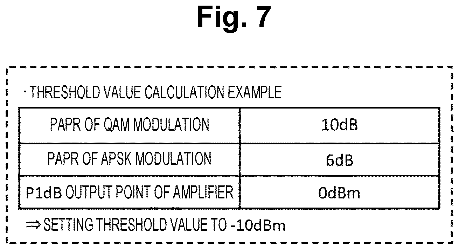

Fig. 7 is a diagram specifically illustrating the above method of setting the modulation scheme switching threshold value. In the example illustrated in Fig. 7, the PAPR of QAM is set to "10 dB". On the other hand, the PAPR of the APSK is "6 dB". The PAPR characteristic storage unit 32 stores at least the PAPR "10 dB" of QAM to be prioritized in the linear region, and the threshold value calculation unit 30 reads the value. The threshold value calculation unit 30 also reads the information on the boundary point stored in the input/output characteristic storage unit 34, that is, "0 dB" which is the P1 dB output point. Then, the threshold value calculation unit 30 sets "-10 dB" obtained by subtracting "10 dB" from "0 dB" as the modulation scheme switching threshold value.

The modulation scheme selection unit illustrated in Fig. 6 compares the threshold value calculated by the threshold value calculation unit 30 with the transmission power provided from the adaptive transmission power control unit 24. When the transmission power is smaller than the threshold value, QAM is selected as the modulation scheme. On the other hand, when the transmission power exceeds the threshold value, APSK is selected.

In the example illustrated in Fig. 7, since the PAPR of QAM is "10 dB" and the threshold value is "-10 dB", if QAM is used when the transmission power is "-10 dB", even if a symbol with peak power is transmitted, the power does not exceed the "boundary point". That is, it is guaranteed that the symbol modulated by QAM is always amplified in the linear region of the power amplifier 26. On the other hand, when the transmission power exceeds the threshold value, APSK is used instead of QAM. According to APSK, the probability that a signal is amplified in the nonlinear region can be made smaller than that in the case of QAM. Therefore, according to the present embodiment, it is possible to ensure stable communication quality in a wide transmission power range.

### [Flow of Processing in First Embodiment]

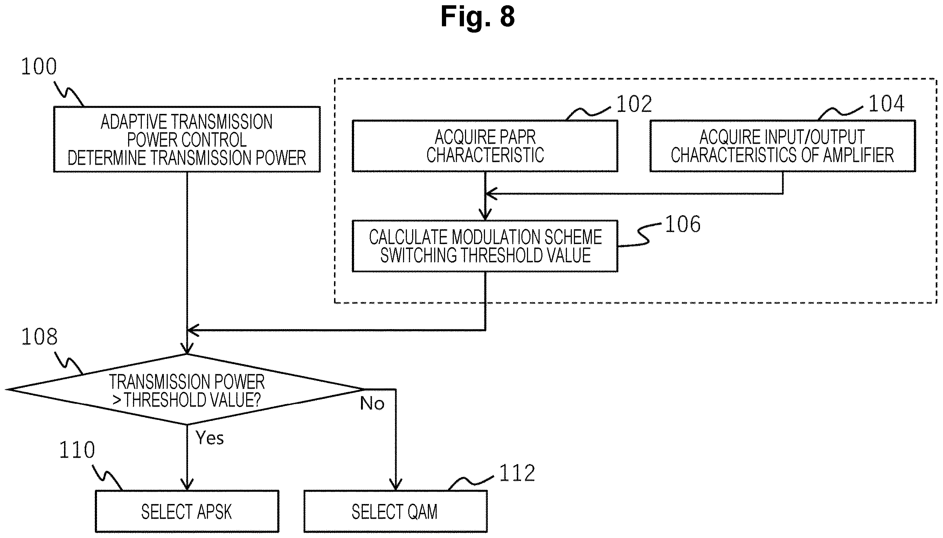

Fig. 8 is a flowchart for describing a flow of main processing performed by the wireless transmission device 10 illustrated in Fig. 6. More specifically, it is a flowchart for describing a flow of processing executed in the modulation scheme selection unit 16, the adaptive transmission power control unit 24, and the threshold value calculation unit 30.

In Fig. 8, the process of step 100 is executed in the adaptive transmission power control unit 24. Here, the optimum transmission power for the wireless transmission device 10 to establish good communication with all the wireless reception devices 12 under the control of the wireless transmission device 10 is determined (step 100).

The processes of steps 102, 104, and 106 are executed in the threshold value calculation unit 30. Specifically, the PAPR characteristic for QAM to be prioritized in the linear region is acquired from the PAPR characteristic storage unit 32 (step 102). In addition, the input/output characteristics of the power amplifier 26 are acquired from the input/output characteristic storage unit 34 (step 104). Then, by performing back-off according to the PAPR of QAM at the boundary point of the power amplifier 26, the modulation scheme switching threshold value is calculated (step 106). Note that these processes, that is, the processes surrounded by a broken-line frame in Fig. 8 may be performed only once as an initialization process at the start of the operation of the wireless transmission device 10.

The processes of steps 108, 110, and 112 are executed in the modulation scheme selection unit 16. Here, first, it is determined whether or not the transmission power determined in this routine is greater than the threshold value calculated in step 106 (step 108). Then, when it is determined that the transmission power used in this routine is greater than the threshold value, the APSK with excellent robustness in the nonlinear region is selected (step 110). On the other hand, when it is determined that the transmission power is not greater than the threshold value, QAM with excellent accuracy in the linear region is selected (step 112).

According to the above processing, it is possible to stably ensure excellent communication quality over a wide transmission power range by appropriately switching and using QAM and APSK according to the determined transmission power while adaptively changing the transmission power.

### [Modification Example of First Embodiment]

Incidentally, in the first embodiment described above, two of 16 QAM and 16 APSK are used as the multi-level modulation scheme, but the present disclosure is not limited thereto. The number of symbols is not limited to 16, and the number of symbols of the two modulation schemes may be different. In addition, various transmission schemes such as orthogonal frequency division multiplexing (OFDM) transmission, discrete Fourier transform-spread-OFDM (DFT-s-OFDM) transmission, and single carrier (SC) transmission can be applied. Various system configurations such as a single input and single output (SISO) configuration and a multiple input and multiple output (MIMO) configuration can be applied. Further, schemes such as Faster-than-Nyquist (FTN) transmission and Nyquist transmission can also be applied. In addition, two or more threshold values may be set using three or more modulation schemes, and these modulation schemes may be appropriately switched according to the transmission power.

Further, in the first embodiment described above, the PAPR is calculated as a fixed value for each multi-level modulation scheme, but the present disclosure is not limited thereto. For example, the PAPR according to the probability of occurrence of the peak may be calculated using a complementary cumulative distribution function (CCDF). For example, when the peak power can be allowed to enter the nonlinear region with a certain probability according to the required quality of communication, the PAPR of QAM may be lowered to "8 dB" or the like as compared with the example illustrated in Fig. 7. According to such a setting, the frequency of switching the modulation scheme can be reduced by expanding the usage region of the QAM.

### Second Embodiment.

### [Configuration of Second Embodiment]

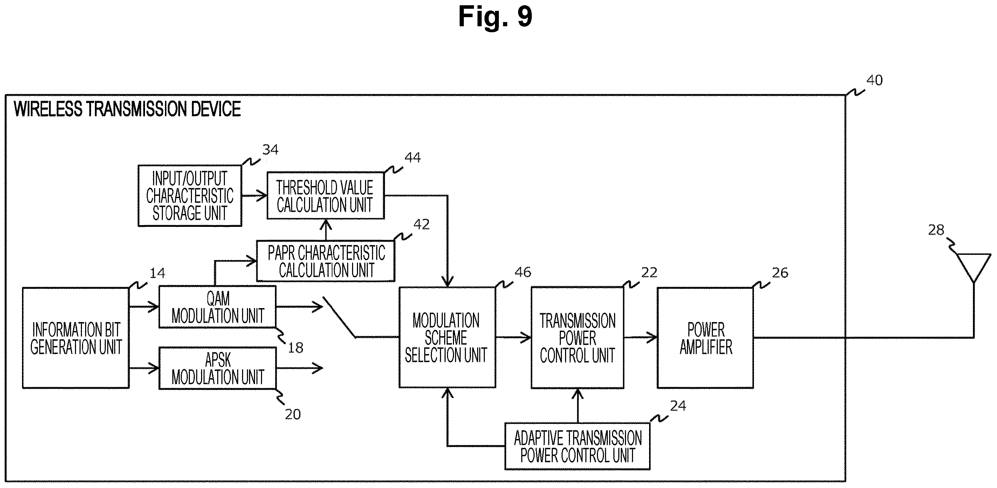

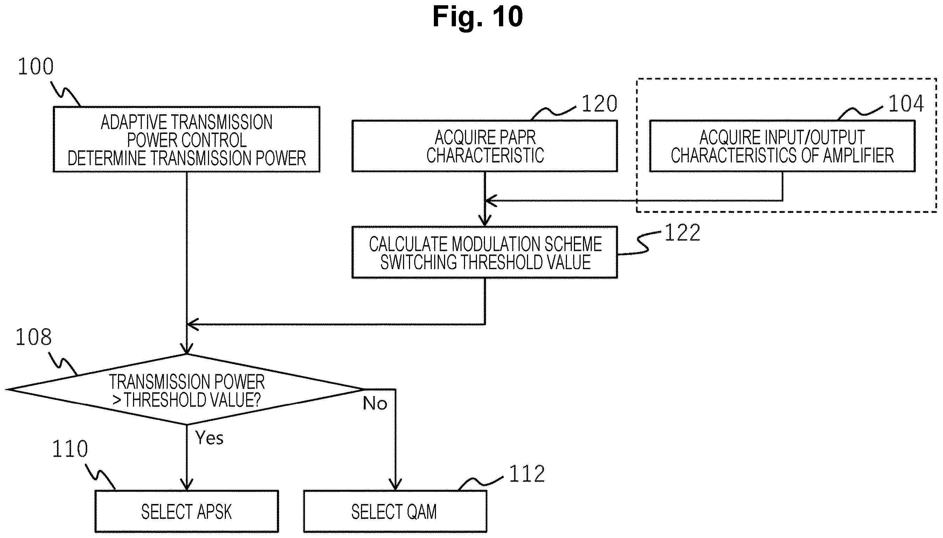

Next, a second embodiment of the present disclosure will be described with reference to Figs. 9 and 10. The wireless communication system of the present embodiment can be implemented by replacing the wireless transmission device 10 with a wireless transmission device 40 in the configuration illustrated in Fig. 1. Also in the present embodiment, the wireless reception device 12 appropriately switches the modulation scheme used for communication in response to a command from the wireless transmission device 40.

Fig. 9 is a block diagram for describing a configuration of the wireless transmission device 40 used in the present embodiment. Note that, in Fig. 9, elements that are the same as or corresponding to the components illustrated in Fig. 6 are denoted by the same reference signs, and the description thereof will be omitted or simplified.

In the first embodiment described above, the threshold value calculation unit 30 calculates a modulation scheme switching threshold value on the basis of the PAPR calculated as the convergence value unique to QAM, and the modulation scheme selection unit 16 always selects the modulation scheme used for communication on the basis of the threshold value. The wireless transmission device 40 according to the present embodiment is characterized in that a threshold value calculation unit 44 calculates a PAPR of QAM for each frame and calculates a modulation scheme switching threshold value on the basis of the PAPR for each frame.

As illustrated in Fig. 9, the wireless transmission device 40 according to the present embodiment includes a QAM modulation unit 18 and an APSK modulation unit 20 immediately after the information bit generation unit 14. In the present embodiment, regardless of which modulation scheme is employed, the information bits generated by the information bit generation unit 14 are always modulated by both QAM and APSK.

The information bits modulated by the QAM modulation unit 18 are provided to a PAPR characteristic calculation unit 42 for each frame. Then, the PAPR characteristic calculation unit 42 calculates a PAPR for each frame on the basis of the received information bits. The PAPR calculated in this manner is provided to the threshold value calculation unit 44 for each frame.

The input/output characteristics of the power amplifier 26 are taken into the threshold value calculation unit 44 from the input/output characteristic storage unit 34. Then, the threshold value calculation unit 44 calculates a modulation scheme switching threshold value for each frame on the basis of the input/output characteristics and the PAPR for each frame. Specifically, back-off corresponding to the PAPR calculated for each frame is applied to a boundary point such as the P1 dB output point to calculate a modulation scheme switching threshold value for each frame.

The threshold value calculated in this manner is provided to a modulation scheme selection unit 46. Then, the modulation scheme selection unit 46 compares the transmission power received from the adaptive transmission power control unit 24 with the threshold value, and selects the modulation scheme to be used for communication. Specifically, when the transmission power exceeds the threshold value, APSK is selected and the information bits modulated by the APSK modulation unit 20 are provided to the transmission power control unit 22. On the other hand, when the transmission power does not exceed the threshold value, QAM is selected, and the information bits modulated by the QAM modulation unit 18 are provided to the transmission power control unit 22.

According to the above configuration, the PAPR of the information bits actually transmitted is reflected in the modulation scheme switching threshold value. The value of PAPR changes for each frame according to the combination of symbols included in the frame. According to the present embodiment, following such a change, it is possible to continue to set a threshold value suitable for maximally utilizing QAM for each frame while avoiding the symbol modulated by the QAM from entering the nonlinear region.

### [Flow of Processing in Second Embodiment]

Fig. 10 is a flowchart for describing a flow of main processing performed by the wireless transmission device 40 illustrated in Fig. 9. More specifically, it is a flowchart for describing a flow of processing executed in the adaptive transmission power control unit 24, the PAPR characteristic calculation unit 42, the threshold value calculation unit 44, and the modulation scheme selection unit 46. Note that, among the processes illustrated in Fig. 10, processes that are the same as or correspond to the processes illustrated in Fig. 8 are denoted by the same reference signs, and the description thereof will be omitted or simplified.

In the flowchart illustrated in Fig. 10, the process of step 120 is executed by the PAPR characteristic calculation unit 42. This process is executed each time the QAM modulation unit 18 modulates the information bits in units of frames. Here, specifically, the PAPR is calculated on the basis of all the symbols included in the information bits generated for each frame (step 120).

The process of step 104 is executed in the same manner as in the first embodiment. Specifically, here, the input/output characteristics of the power amplifier 26 are acquired from the input/output characteristic storage unit 34. The process of step 104, that is, the process surrounded by a broken-line frame in Fig. 10 may be performed only once as the initialization process in the same manner as in the first embodiment.

The process of step 122 is repeatedly executed in the threshold value calculation unit 44 each time a frame of information bits is generated. Specifically, a value obtained by applying back-off corresponding to the PAPR acquired in step 120 to the boundary point indicated by the input/output characteristics acquired in step 104 is calculated as the modulation scheme switching threshold value (step 122).

The processes in steps 100 and 108 to 112 are substantially similar to those in the first embodiment. According to the above processing, for each piece of frame data actually transmitted, it is possible to determine whether QAM or APSK is suitable for the transmission of the data. Then, it is possible to always continue to make optimum selections over a wide transmission power range on the basis of the result determined for each frame. Therefore, according to the present embodiment, it is possible to provide better communication quality than the case of the first embodiment.

### [Modification Example of Second Embodiment]

Incidentally, in the first embodiment described above, it has been described as a modification example that application of the present disclosure is not limited to the two multi-level modulation schemes of 16 QAM and 16 APSK. The same applies to the second embodiment. That is, as in the case of the first embodiment, the configuration of the second embodiment can be applied to a larger number of various modulation schemes.

Furthermore, in the second embodiment described above, the PAPR is calculated for each frame, and the threshold value is switched for each frame. However, the present disclosure is not limited thereto. That is, the frequency of calculating the PAPR and the threshold value is not limited to each frame, and the PAPR and the threshold value may be updated every plurality of frames or every specified time according to a preset rule.

### Reference Signs List

- 10, 40: Wireless transmission device
- 12: Wireless reception device
- 16, 46: Modulation scheme selection unit
- 18: QAM modulation unit
- 20: APSK modulation unit
- 22: Transmission power control unit
- 24: Adaptive transmission power control unit
- 26: Power amplifier
- 30, 44: Threshold value calculation unit
- 32: PAPR characteristic storage unit
- 34: Input/output characteristic storage unit
- 42: PAPR characteristic calculation unit

## Claims

1. A wireless communication method using a wireless transmission device and a wireless reception device that support at least two multi-level modulation schemes,
the at least two multi-level modulation schemes including a first modulation scheme and a second modulation scheme having a shorter minimum Euclidean distance on a constellation and a lower peak to average power ratio (PAPR) than the first modulation scheme, and
the wireless transmission device having a function of controlling a power amplifier to change transmission power, the wireless communication method comprising:
a step of determining, by the wireless transmission device, the transmission power;
a step of comparing, by the wireless transmission device, the transmission power with a threshold value set on the basis of a boundary point at which a linear region and a nonlinear region of the power amplifier are switched;
a step of selecting, by the wireless transmission device, the first modulation scheme as a multi-level modulation scheme used for communication when the transmission power is not greater than the threshold value;
a step of selecting, by the wireless transmission device, the second modulation scheme as a multi-level modulation scheme used for communication when the transmission power is greater than the threshold value;
a step of commanding, by the wireless transmission device, the wireless reception device to perform communication using the selected modulation scheme; and
a step of communicating, by the wireless reception device, with the wireless transmission device using the commanded modulation scheme.

2. The wireless communication method according to claim 1, wherein the threshold value is a value obtained by applying back-off corresponding to a first PAPR, which is a PAPR of the first modulation scheme, to transmission power corresponding to the boundary point.

3. The wireless communication method according to claim 2, wherein the first PAPR is a convergence value for the first modulation scheme.

4. The wireless communication method according to claim 3, wherein the first PAPR is a value set to allow generation of a symbol with peak power exceeding a value of the first PAPR at a probability corresponding to required communication quality.

5. The wireless communication method according to claim 2, wherein the first PAPR is calculated on the basis of a plurality of symbols generated within a range divided by a predetermined rule, and is updated at a predetermined cycle.

6. The wireless communication method according to any one of claims 1 to 5, wherein the first modulation scheme and the second modulation scheme are QAM and APSK having the same number of symbols.

7. A wireless communication system comprising a wireless transmission device and a wireless reception device that support at least two multi-level modulation schemes, wherein
the at least two multi-level modulation schemes include a first modulation scheme and a second modulation scheme having a shorter minimum Euclidean distance on a constellation and a lower PAPR than the first modulation scheme,
the wireless transmission device
has a function of controlling a power amplifier to change transmission power, and
is configured to execute:
a process of determining the transmission power;
a process of comparing the transmission power with a threshold value set on the basis of a boundary point at which a linear region and a nonlinear region of the power amplifier are switched;
a process of selecting the first modulation scheme as a multi-level modulation scheme used for communication when the transmission power is not greater than the threshold value;
a process of selecting the second modulation scheme as a multi-level modulation scheme used for communication when the transmission power is greater than the threshold value; and
a process of commanding the wireless reception device to perform communication using the selected modulation scheme, and
the wireless reception device is configured to communicate with the wireless transmission device using the commanded modulation scheme.

8. A wireless transmission device that supports at least two multi-level modulation schemes and has a function of communicating with a wireless reception device that supports the at least two multi-level modulation schemes, wherein
the at least two multi-level modulation schemes include a first modulation scheme and a second modulation scheme having a shorter minimum Euclidean distance on a constellation and a lower PAPR than the first modulation scheme, and
the wireless transmission device
has a function of controlling a power amplifier to change transmission power, and
is configured to execute:
a process of determining the transmission power;
a process of comparing the transmission power with a threshold value set on the basis of a boundary point at which a linear region and a nonlinear region of the power amplifier are switched;
a process of selecting the first modulation scheme as a multi-level modulation scheme used for communication when the transmission power is not greater than the threshold value;
a process of selecting the second modulation scheme as a multi-level modulation scheme used for communication when the transmission power is greater than the threshold value; and
a process of commanding the wireless reception device to perform communication using the selected modulation scheme.
